(19) Europäisches Patentamt
European Patent Office
Office européen des brevets

(11) **EP 3 772 431 B1**

(12) **EUROPEAN PATENT SPECIFICATION**

(45) Date of publication and mention
of the grant of the patent:
**12.10.2022   Bulletin 2022/41**

(21) Application number: **19190786.4**

(22) Date of filing: **08.08.2019**

(51) International Patent Classification (IPC):
**B60N 2/56** *(2006.01)*        **A47C 7/00** *(2006.01)*

(52) Cooperative Patent Classification (CPC):
**B60N 2/56; A47C 7/00**

(54) **SHAPE-SHIFTING SELF-HEALING AND SELF-CLEANING SURFACE MATERIALS**

SHAPE SHIFTING SELF HEALING UND SELBSTREINIGENDE OBERFLÄCHENMATERIALIEN

MATÉRIAUX DE SURFACE AUTO-GUÉRISANTS ET DE NETTOYAGE AUTOMATIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.02.2021   Bulletin 2021/06**

(73) Proprietor: **Benecke-Kaliko AG
30419 Hannover (DE)**

(72) Inventors:
• **Hebbale, Veeresh Ravichand
560099 Bangalore (IN)**

• **Sharma, Neelima Raj
560099 Bangalore (IN)**

(74) Representative: **Continental Corporation
c/o Continental AG
Intellectual Property
Postfach 169
30001 Hannover (DE)**

(56) References cited:
**DE-A1-102009 033 254     RU-C2- 2 293 815
US-A1- 2013 005 848**

**Description**

The present invention relates to shape shifting surface materials. The present invention relates in particular to a system, comprising a surface material comprising a first layer having perforations and a second layer carrying fibers, wherein the fibers can be switched between an erected position and a relaxed position. The present invention also relates to a method for adjusting the actual temperature $T_A$ at at least one position of a surface material of the system according to the invention.

US 2013/0005848 A1 discloses a sheet-like material, which is produced by an environmentally friendly procedure and has an elegant appearance with piloerection, good wear resistance and good texture. Specifically disclosed is a sheet-like material containing a water-dispersed polyurethane within a fibrous base that contains extra-fine fibers having an average single fiber diameter of 0.3-7 $\mu$m.

The interior temperature of a car or room may become very high when the outside temperature is high. This may cause a discomfort in sitting on a surface material, including sweating on the surface material. This may also cause discomfort and distraction in driving, in particular when the steering wheel gets hot. Overheating may cause fatalities in children due to hyperthermia, and heat related problems such as heat boils, rashes, etc.

On the other extreme, the interior temperature of a car or room may become very low when the outside temperature is cold. This may cause hypothermia, frostbites, chilblains, a fogging of windshield, windows, and rearview mirrors. An existing solution of block heaters drains the battery of a car and enhance the cold-start problem that increases vehicle emissions.

Therefore, there remains a need to improve the comfort and safety of surface materials, in particular of surface materials in a vehicle interior or room interior. In particular, the comfort and safety shall become less dependent from weather conditions. Thus, there remains a need to improve the control on the temperature of surface materials in a vehicle interior or room interior. Further, there remains a need to improve the control on the texture of surface materials in a vehicle interior or room interior.

Furthermore, many surface materials, including the interior surface materials of a car, are difficult to clean. Hygiene and health related issues may arise from dirty car interiors or other dirty surface materials.

Thus, there remains a need to provide materials, which are easy to clean, in particular for car interiors such as seats.

The present disclosure shall provide at least one system and/or at least one method to solve at least one of the above objects.

RU 2 293 815 C2 relates to a surface simulating grass comprises rows consisting of strips projecting from elastic bearing sheet, to which in gaps between strip rows temperature control devices are connected.

DE 10 2009 033254 A1 relates to a ventilation device with at least one air guiding device having at least one air guiding layer and at least one accompanying layer.

Summary of the invention

At least one of the objects of the invention is solved by a system, comprising

- a surface material comprising (i) a first layer having perforations and (ii) a second layer carrying fibers,

wherein the fibers are arranged such that they penetrate the first layer having perforations via the perforations,

- a mechanism for switching the fibers between an erected position and a relaxed position,
- a control unit for comparing an actual temperature $T_A$ at at least one position of the surface material with a temperature threshold $T_T$ and for controlling the mechanism for switching the fibers between an erected position and a relaxed position based on the result of the comparison.

The system according to the invention enables a user to choose between two positions. The position with a relaxed position of the fibers allows a cozier and warmer surface experience and is particularly suitable during colder climates. The relaxed position of the fibers provides decreased surface area for heat dissipation. More air is trapped within the surface material and air insulation increases. This process locks the heat and keeps the body warm. In the erected position, an increased surface area allows free flow of air, i.e. increased air circulation. This process brings down the internal surface temperature. Sweating is reduced. The system does not only increase the comfort of a person sitting on the surface material, it is also good for the person's health, since measurements may be taken against extreme cold or heat.

Inter alia, the solution enables to modify the heat dissipation rate making the surface either cool slower or faster. The surface area is directly proportional to the rate of dissipation of heat. An increase in the area results in an increase in the rate of heat dissipation, providing faster cooling of seats.

The rate of heat dissipation is defined as:

$$Q = k * A * (T1 - T2) / L,$$

where

k = thermal conductivity of the material,
A = surface area,
T1 = initial (pre-diffuse or inner surface) temperature,
T2 = temperature at the final cross-sectional area (or outer surface), and
L = thickness of the material.

The solution of the invention enables a faster heat dissipation rate making the surface material cool much faster.
The system of the invention allows user personalization of the surface material temperature and/or texture.
The system of the invention does not drain the battery and causes less cold starts and emissions.

Detailed description

The verbs "to comprise" and "to contain" and their conjugations comprise the term "consist of" and its conjugations.
The term "a" or "one" includes the term "at least one".
The embodiments described herein may be combined in any manner, unless this is clearly not possible from the subject matter of the embodiments.
In one embodiment, the surface material of the system of the invention is the surface material of a seat or a constituent thereof, more preferably of a car seat. In one embodiment, the surface material of the system is the surface material of a chair or a constituent thereof, e.g. in an office, college, school, hotel, spa, restaurant, cruise, gym. In the one embodiment, the surface material of the system is the surface material of a couch or a constituent thereof. The system of the invention is completely extendible and scalable to any seat/sitting opportunity or vehicle.
In one embodiment, the surface material of the system of the invention is the surface material of a house interior or a constituent thereof. In one embodiment, the surface material of the system of the invention is the surface material of a carpet or a constituent thereof or of a cushion or a constituent thereof.
The first layer has/comprises perforations. In other words, the first layer is a perforated layer. In other words, perforations/holes are arranged within the first layer. The diameter of the perforations is adapted to the diameter of the fibers. The diameter of the perforations is larger than the diameter of the fibers. The diameter of the perforations is such that the fibers pass through. The first layer having perforations preferably is a/the cover layer of the surface material. In case of a seat, the first layer having perforations is preferably the layer on which a person sits. In this case, the first layer having perforations is/forms the seat surface. The surface material or the seat may comprise further layers or structures as known to the person skilled in the art.
The second layer carrying fibers is a layer comprising fibers. The fibers are attached to the second layer. The fibers penetrate the first layer having perforations through the perforations/holes arranged within the first layer. According to the invention, the fibers are so called piloerection fibers, i.e. the fibers can be switched between an erected position and a relaxed position. The application of piloerection in the system according to the invention allows to adjust the aeration respectively insulation respectively temperature of the first layer and/or surface material. The fibers may be designated as structures or projections. The fibers (structures or projections) preferably have the shape of a hair, column, cone, cylinder, fiber, or fiber bundle. More preferred is the shape of a hair, cylinder, fiber, or fiber bundle.
In one embodiment, the fibers are camel hair fibers. In one embodiment, the fibers are (made) from camel hair or fur. In one embodiment, the fibers are natural fibers. In one embodiment, the fibers are artificial fibers, e.g. from plastic.
In one embodiment, the fibers are hollow inside, i.e. the fibers have a cavity. In one embodiment, the fibers are hollow inside and have capillary action.
The fibers are connected to the mechanism for switching the fibers between an erected position and a relaxed position.
In one embodiment, the fibers are hair like.
In one embodiment, the fibers are not attached to the perforated first layer. In one embodiment, the fibers are attached to the perforated first layer.
In one embodiment, the fibers are fibers for capillary action. In other words, the fibers are hollow structures and/or are made up of materials that allow capillary action. Thus, moisture is pushed from the proximal end towards the distal end, i.e. moisture is pushed from the second layer carrying fibers towards the first layer having perforations (and thus the top/atmosphere).

The fibers have a proximal and a distal end. Preferably, the distal end of the fibers is closer to the first layer than to the second layer and the proximal end of the fibers is closer to the second layer than to the first layer.

In one embodiment, the fibers are attached to the second layer carrying the fibers close to their proximal end. In this embodiment, preferably the fibers are connected to the mechanism for switching the fibers between an erected position and a relaxed position at their proximal end.

In one embodiment, the fibers are connected to the mechanism for switching the fibers between an erected position and a relaxed position in series.

The mechanism for switching the fibers between an erected position and a relaxed position comprises means for switching the fibers between an erected position and a relaxed position. The means interact with the fibers and/or first layer and/or second layer and enable piloerection of the fibers by switching the fibers between an erected position and a relaxed position. The mechanism for switching the fibers between an erected position and a relaxed position may comprise means for displacement of the fibers and/or first layer and/or second layer relative to each other. In one embodiment, the mechanism for switching the fibers between an erected position and a relaxed position comprises means for horizontal displacement of the fibers and of the first layer relative to each other. Since the fibers are arranged within the perforations of the first layer, a relative displacement of the fibers and/or first layer and/or second layer will switch the fibers between an erected position and a relaxed position.

The mechanism for switching the fibers between an erected position and a relaxed position is preferably, but not necessarily, part of the surface material or of a seat.

In one embodiment, the mechanism for switching the fibers between an erected position and a relaxed position comprises at least one spring. The mechanism for switching the fibers between an erected position and a relaxed position preferably comprises at least one thread or threads, which connect the fibers to the at least one spring. In one embodiment, the fibers are arranged in a plurality of rows. In this embodiment, each row may be attached to one spring.

In one embodiment, the fibers are connected to the mechanism for switching the fibers between an erected position and a relaxed position via a mesh. In this embodiment, the fibers are attached to the mesh.

In one embodiment, the mechanism for switching the fibers between an erected position and a relaxed position is a mechanism for erecting the fibers. In other words, the fibers return to the relaxed position (automatically) once the mechanism is released.

In one embodiment, the mechanism for switching the fibers between an erected position and a relaxed position comprises a solenoid. A solenoid is the generic term for a coil of wire used as an electromagnet. It also refers to a device that converts electrical energy to mechanical energy using a solenoid. The device creates a magnetic field from electric current and uses the magnetic field to create linear motion. The person skilled in the art knows solenoids from common applications. Such are to power a switch, like the starter in an automobile, or a valve, such as in a sprinkler system.

The control unit comprises means for comparing an actual temperature $T_A$ at at least one position in the system with a temperature threshold $T_T$ and means for controlling the mechanism for switching the fibers between an erected position and a relaxed position based on the result of the comparison. The control unit preferably comprises an electronic device. The control unit is preferably, but not necessarily, part of the surface material or of the seat.

With regard to the control unit, the term "to control (the at least one mechanism for switching the fibers between an erected position and a relaxed position)" may be understood as "to drive" or "to set".

In one embodiment, the control unit controls the at least one mechanism for switching the fibers between an erected position and a relaxed position using a pulley mechanism. In one embodiment, the control unit releases the mechanism for switching the fibers between an erected position and a relaxed position and the fibers are switched into a relaxed position. In one embodiment, the pulley mechanism releases the mechanism for switching the fibers between an erected position and a relaxed position and the fibers are switched into a relaxed position.

In one embodiment, the control unit controls the at least one mechanism for switching the fibers between an erected position and a relaxed position using a pulley mechanism. In one embodiment, the control unit activates the mechanism for switching the fibers between an erected position and a relaxed position and the fibers are switched into an erected position. In one embodiment, the pulley mechanism strains the mechanism for switching the fibers between an erected position and a relaxed position and the fibers are switched into an erected position.

In one embodiment, the control unit comprises a pulley mechanism for controlling the mechanism for switching the fibers between an erected position and a relaxed position.

In one embodiment, the seat is a car seat.

In one embodiment, the system comprises a temperature input user unit for providing the control unit with a temperature threshold $T_T$. In one embodiment, the temperature input user unit is part of the surface material or of a seat, e.g. part of the armrest. In one embodiment, the temperature input user unit is not part of the surface material or of a seat, but e.g. part of the car instruments. The embodiment is particularly user friendly as each user can set the threshold $T_T$ upon his own preferences. In a different embodiment, there is no temperature input user unit. Thus, the temperature threshold $T_T$ may be set or preset by the manufacturer.

In one embodiment, the surface material or a seat comprises a temperature sensor for measuring the actual temperature $T_A$ at at least one position of the surface material or of the seat and for providing the actual temperature $T_A$ to the control unit. The temperature sensor comprises means for measuring the actual temperature $T_A$ at at least one position of the surface material or of the seat and for providing the actual temperature $T_A$ to the control unit. The temperature sensor is preferably, but not necessarily, part of the surface material or of the seat.

In one embodiment, the at least one position of the surface material or of the seat with the actual temperature $T_A$ is arranged within the first layer having perforations or within the second layer carrying fibers or within another layer of the surface material or of the seat. It is particularly important to measure the actual temperature $T_A$ close to the user to allow a precise adjustment to the user's preferences.

In one embodiment, at least a part of the fibers are hollow. In one embodiment, all fibers are hollow. In one embodiment, at least a part of the fibers or all fibers have a capillary function. In other words, liquids are drawn by capillary action from the second layer carrying fibers towards the first layer having perforations. The wicking capillary action provides enhanced hygiene and lesser amount of servicing. The capillary action enables the fibers to push the dirt and moisture to the top, which provides lesser chances of formation of bacteria and enhanced hygiene.

In one embodiment, each fiber has a diameter of 0.01 to 2 mm, preferably of 0.02 to 0.5 mm, more preferably of approximately 0.02 mm.

In one embodiment, each fiber has a length and/or width of 0.01 to 2 mm, preferably of 0.02 to 0.5 mm, more preferably of approximately 0.02 mm.

In one embodiment, each fiber has a height of 1 to 3 cm, preferably of 1.5 to 2.5 cm, more preferably of approximately 2 cm. In one embodiment, each fiber has a height of 2 to 14 cm, preferably of 6 to 10 cm, more preferably of approximately 8 cm.

In one embodiment, the diameter of the cavity enabling the capillary function within the fibers is 0.001 to 0.005 mm, preferably of 0.002 to 0.004 mm, more preferably of approximately 0.002 mm.

It is a further object of the invention to provide a method to solve at least one of the objects.

According to the invention, a method for adjusting the actual temperature $T_A$ or texture at at least one position of a surface material of a system of the invention, preferably comprises

   a) comparing the actual temperature $T_A$ at at least one position of the surface material with a temperature threshold $T_T$ by means of a control unit, and
   b1) if the actual temperature $T_A$ is above / exceeds the temperature threshold $T_T$, the control unit controls the mechanism for switching the fibers between an erected position and a relaxed position to switch the fibers into an erected position, and/or
   b2) if the actual temperature $T_A$ is / falls below the temperature threshold $T_T$, the control unit controls the mechanism for switching the fibers between an erected position and a relaxed position to switch the fibers into a relaxed position.

In one embodiment, the surface material is the surface material of a seat or a constituent thereof, more preferably of a car seat.

In one embodiment, the surface material is the surface material of a house interior or a constituent thereof. In one embodiment, the surface material is the surface material of a carpet or a constituent or of a cushion or a constituent thereof. In one embodiment, the method is a continuous method.

In one embodiment, the surface material is the surface material of a car seat and the method is conducted when the car is switched on.

In one embodiment, the surface material is the surface material of a car seat and the method is continuously conducted as long as the car is switched on.

In one embodiment, the method comprises measuring the actual temperature $T_A$ at at least one position of the surface material using a temperature sensor and providing the control unit with the actual temperature $T_A$.

In one embodiment, the method comprises setting the temperature threshold $T_T$ using a temperature input user unit and providing the control unit with the temperature threshold $T_T$.

In one embodiment, the surface material is the surface material of a car seat and the mechanism for switching the fibers between an erected position and a relaxed position switches the fibers into a relaxed position when the car is switched off.

In one embodiment, the method comprises displacing the fibers and/or first layer and/or second layer relative to each other. In one embodiment, the method comprises displacing the fibers and the first layer horizontally relative to each other for switching the fibers between an erected position and a relaxed position.

The embodiments, advantages, and explanations described for the system of the invention apply to and may be combined with the method of the invention and vice versa.

According to the invention, the liquid crystalline networks are so called piloerection liquid crystalline networks, i.e. the liquid crystalline networks can be switched between an erected position and a relaxed position. The liquid crystalline networks preferably have the shape of a tentacle, column, cone, cylinder, (thick) fiber. The application of piloerection in the system according to the invention allows to adjust the aeration respectively insulation respectively temperature of the surface material.

Liquid crystalline networks and liquid crystalline networks activation deactivation mechanism are known to the person skilled in the art. Liquid crystalline networks are known e.g. from in US 2017/0240811 A1. A self-healing material is disclosed in US 9 598 313 B2. A self-cleaning material is disclosed in US 2010/0291350 A1.

The liquid crystalline networks activation deactivation mechanism comprises means for switching the fibers between an erected position and a relaxed position.

The liquid crystalline networks activation deactivation mechanism is preferably part of the surface material or of the seat.

The control unit comprises means for comparing an actual temperature $T_A$ at at least one position in the system with a temperature threshold $T_T$ and means for controlling the liquid crystalline networks activation deactivation mechanism based on the result of the comparison. The control unit preferably comprises an electronic device. The control unit is preferably, but not necessarily, part of the surface material or of the seat.

With regard to the control unit, the term "to control (the liquid crystalline networks activation deactivation mechanism)" may be understood as "to drive" or "to set".

In one embodiment, the at least one position of the surface material is located on the surface of a seat. In one embodiment, the at least one position of the surface material with the actual temperature $T_A$ is arranged within the surface of a seat or within another layer of a seat. It is particularly important to measure the actual temperature $T_A$ close to the user to allow a precise adjustment to the user's preferences.

In one embodiment, the system comprises a temperature input user unit for providing the control unit with a temperature threshold $T_T$. In one embodiment, the temperature input user unit is part of the surface material or of a seat, e.g. part of the armrest. In one embodiment, the temperature input user unit is not part of the surface material or of the seat, but preferably part of the car instruments. The above embodiment is particularly user friendly as each user can set the threshold $T_T$ upon his own preferences. In a different embodiment, there is no temperature input user unit. Thus, the temperature threshold $T_T$ may be set or preset by the manufacturer.

In one embodiment, the seat or the surface material comprises a temperature sensor for measuring the actual temperature $T_A$ at at least one position of the surface material or the seat and for providing the actual temperature $T_A$ to the control unit. The temperature sensor comprises means for measuring the actual temperature $T_A$ at at least one position of the surface material or seat and for providing the actual temperature $T_A$ to the control unit. The temperature sensor is preferably, but not necessarily, part of the seat or of the surface material.

In one embodiment, the system comprises a pressure sensor for gathering information on damage to and/or dirt on the liquid crystalline networks and for providing the control unit with the information.

An alternative method of the invention for adjusting the actual temperature $T_A$ or texture at at least one position of the surface material of a system of the invention, comprises

> a) comparing the actual temperature $T_A$ at at least one position of the surface material with a temperature threshold $T_T$ by means of a control unit, and
> b1) if the actual temperature $T_A$ is above / exceeds the temperature threshold $T_T$, the control unit controls the at least one liquid crystalline networks activation deactivation mechanism to deactivate the liquid crystalline networks into a relaxed position, and/or
> b2) if the actual temperature $T_A$ is / falls below the temperature threshold $T_T$, the control unit controls the at least one liquid crystalline networks activation deactivation mechanism to activate the liquid crystalline networks into an erected position.

In one embodiment, the method is a continuous method.

In one embodiment, the surface material is the surface material of a car seat and the method is conducted when the car is switched on.

In one embodiment, the surface material is the surface material of a car seat and the method is continuously conducted as long as the car is switched on.

In one embodiment, the method comprises measuring the actual temperature $T_A$ at at least one position of the surface material or seat using a temperature sensor and providing the control unit with the actual temperature $T_A$.

In one embodiment, the method comprises setting the temperature threshold $T_T$ using a temperature input user unit and providing the control unit with the temperature threshold $T_T$.

In one embodiment, the surface material is the surface material of a car seat and the liquid crystalline networks activation deactivation mechanism switches the liquid crystalline networks into a relaxed position when the car is switched off.

The invention will be further illustrated in the light of the following examples and the following Figures:

Fig. 1     shows a seat and sections of the surface material of the system of the invention;

Fig. 2     shows a flow diagram showing an embodiment of the method of the invention;

Fig. 3     shows an embodiment of the system of the invention;

Examples

The invention provides a mechanism where the surface material is constructed of a material that is controlled by user input and/or external stimuli and could have hollow hair-like or tentacle-like structures. In the present examples, the system of the invention and its surface material is employed in a car seat.

Example A

A user input is entered for setting the temperature threshold $T_T$. When car ignition is turned on, a temperature sensor in the seat is read to check whether the actual temperature $T_A$ is above or below the temperature threshold $T_T$.
The initial condition of the hollow fibers is in a lowered/relaxed state (L). This state may change to erected state (E) based on the actual temperature $T_A$ exceeding the temperature threshold $T_T$ entered by the user. The following actions may be taken:
If the actual temperature is higher than the temperature threshold $T_T$ entered by the user, a pulley mechanism of the control unit is activated to get the spring in action, which allows the hollow fibers to get to the erected position E. This provides increased surface area that allows free flow of air and increases air circulation. This process brings down the internal surface temperature.
If the temperature is lower than the temperature threshold $T_T$ entered by the user, the pulley mechanism releases the spring, which allows the hollow fibers to come back to normal (relaxed) position L. This provides decreased surface area that causes more air to be trapped and increases air insulation. This process locks the heat within and keeps the body warm.

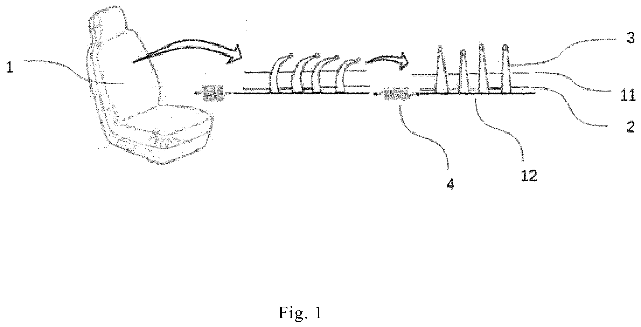

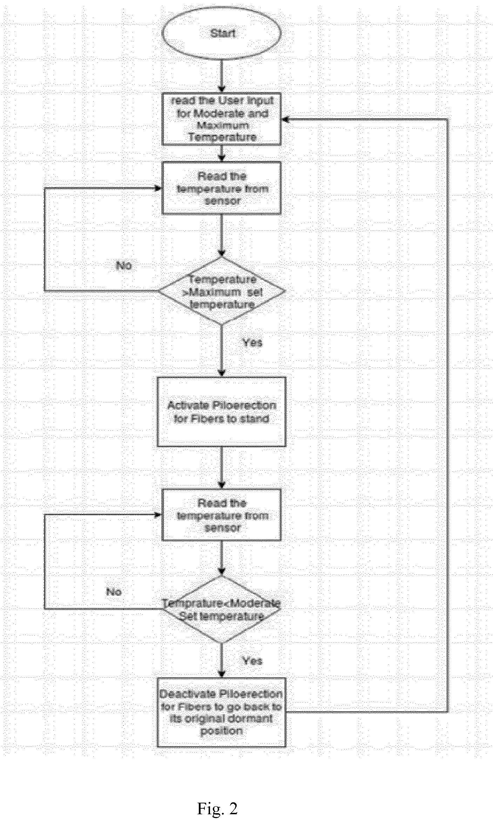

Fig. 1 may also be used for illustration of the invention. Fig. 1 shows a seat 1 and sections of the seat 1 and of the system of the invention. The fibers 3 penetrate the perforations of the first layer 11. When the car is switched off, the hollow fibers 3 of the second layer 2 are in dormant lowered (relaxed) state L (mid section of Fig. 1). When the temperature recedes the temperature threshold $T_T$, the fibers 3 revert back to this relaxed state to trap the air and enhance insulation. When the actual temperature exceeds the temperature threshold $T_T$ (right section of Fig. 1), the fibers 3 are erected to state E, which increases the surface area and thus the rate of dissipation. The switching is accomplished by use of a spring mechanism 4 and a mesh 12. The mesh 12 connects a plurality of fibers 3. Fig. 2 shows a flow diagram showing an embodiment of the method of the invention, where the method is a continuous method.
The capillary action enabled by the fibers causes the dirt and moisture to be pushed to the top, which provides a lower chance of formation of bacteria and enhanced hygiene.

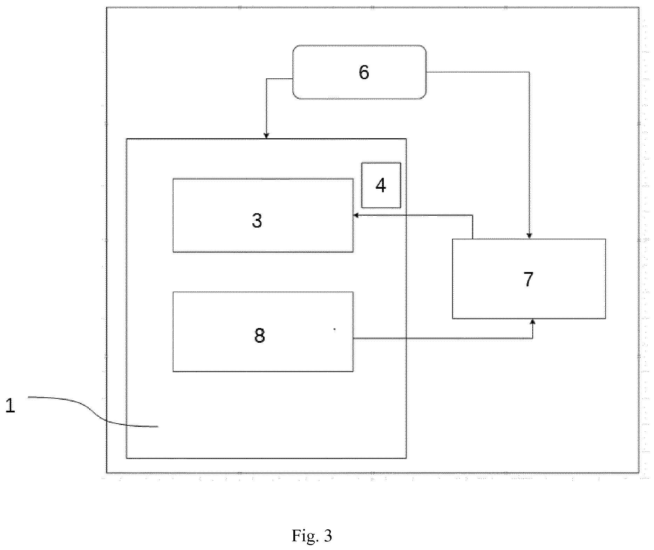

Fig. 3 may also be taken into account for illustration of the invention. Fig. 3 shows an embodiment of the system of the invention. The seat 1 comprises a surface material with a first layer having perforations 11, which is the cover layer and seat surface. Underneath this surface, a second layer carrying fibers 2 is arranged. The fibers 3 are arranged such that they penetrate the first layer having perforations via the perforations. The fibers 3 are controlled by a control unit 7 via a spring mechanism 4. The spring mechanism 4 comprises means for switching the fibers 3 between an erected position and a relaxed position to influence texture and heat dissipation from the seat. The control unit 7 compares an actual temperature $T_A$ at the seat surface measured by a temperature sensor 8 with a temperature threshold $T_T$. The temperature threshold $T_T$ has been entered by a user via a temperature input user unit 6.

Calculation

A seat has a flat surface with an area of 1 m$^2$. The fibers are cylindrical, and the fiber diameter is 0.002 mm and height is 8 cm. Thus, the fiber radius is 0.001 mm, i.e. 0,000001 m.

Calculation 1:

Area of the base of the cylindrical fiber ($m^2$) = pi * radius * radius = (3.14 (pi) * 0.000001 m * 0.000001 m) = 3.14 * $10^{-12}$ $m^2$

Number of cylindrical fibers in the seat = 1 $m^2$ / (3.14 * $10^{-12}$ $m^2$) = 318471337580 cylindrical fibers

Curved surface area of a hollow cylindrical fibers = 2 * pi * r * h = (2 * 3.14 * $10^{-6}$ m * 0.08 m) = 0.5024 * $10^{-6}$ $m^2$

Calculation 2:

Surface area of all fibers on an area of 1 $m^2$ fiber enabled sheet = number of fibers in the seat * surface area of 1 fiber = 318471337580 * 0.5024 * $10^{-6}$ $m^2$ = approximately 160000 $m^2$

The normal seat with a surface area of 1 $m^2$ has rate of heat dissipation as

$$Q = 1 * k * (T1 - T2) / L$$

The seat using the system of the invention has rate of heat dissipation as

$$Q = 160000 * k * (T1 - T2) / L$$

This design of the invention allows up to approximately 160000 times faster dissipation of heat (calculated theoretical value). These calculations also prove that finer fibers enable a higher number of fibers and thus a larger surface area and thus, and thus a higher rate of heat dissipation.

Example B for the alternative solution

A user input is entered for setting the temperature threshold $T_T$. When car ignition is turned on, the temperature sensor is read to check whether the temperature is above or below the temperature threshold $T_T$.

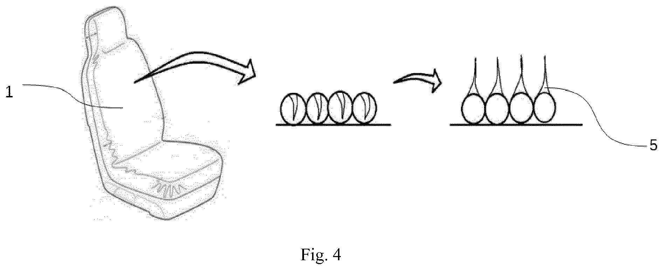

Fig. 4 may be taken into account for illustration of the invention. Fig. 4 shows a seat 1 using the system of the invention. The surface of the seat is covered with liquid crystalline networks 5. The initial condition of the liquid crystalline networks 5 is in a relaxed state (mid section of Fig. 4). This state may change to erected state based on the actual temperature $T_A$ falling below the temperature threshold $T_T$ entered by the user. The following actions may be taken:

If the temperature is higher than the temperature threshold $T_T$, the seat remains in deactivated condition and the liquid crystalline networks molecules stay deactivated. The liquid crystalline networks remain embedded in the seat. This allows less heat to be produced.

If the temperature is lower than the temperature threshold $T_T$, the liquid crystalline networks are activated and emerge, which results in the seat texture changing to a furrier seat, providing warmth.

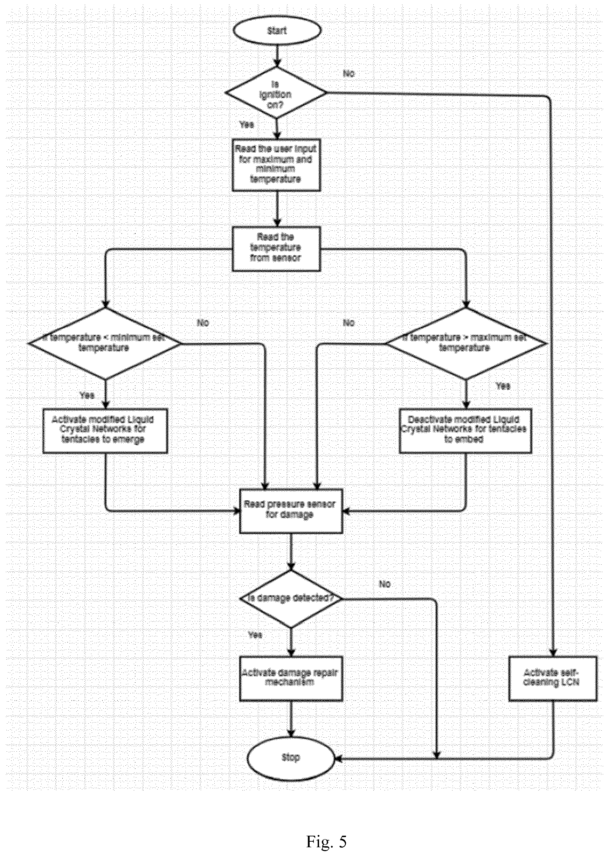

Fig. 5 may also be taken into account for illustration of the invention. Fig. 5 shows a flow diagram showing an embodiment of the alternative method of the invention, where the method is a continuous method. The method further includes self-cleaning and self-repairing mechanisms of the liquid crystalline networks.

A pressure sensor is used to determine damage done to the surface of the seat and also to ascertain whether the seat is dirty. If so, a damage repair and cleaning process activates from the liquid crystalline networks. When a damage is detected on the surface of the material, the liquid crystalline network cells will be self-healed through exposure to UV light (from sun or externally). This allows cleaning of the surface and will help people with skin allergies due to the cleansing mechanism. The self-repairing property allows decreased frequency in the servicing of car interiors and also cost saving on services.

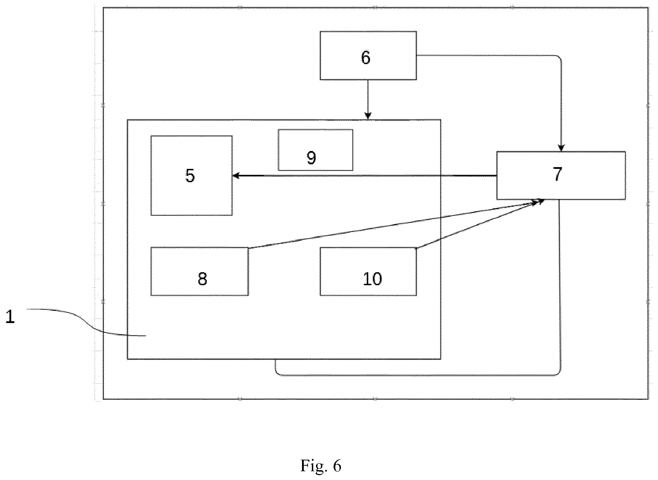

Fig. 6 may also be taken into account for illustration of the invention. Fig. 6 shows an embodiment of the alternative system of the invention. The seat 1 comprises a plurality of liquid crystalline networks 5, which is controlled by a control unit 7 via a liquid crystalline networks activation deactivation mechanism 9. The liquid crystalline networks activation deactivation mechanism 9 comprises means for switching the liquid crystalline networks 5 between an erected position and a relaxed position to influence texture and heat dissipation from the seat. The control unit 7 compares an actual temperature $T_A$ at the seat surface measured by a temperature sensor 8 with a temperature threshold $T_T$. The temperature threshold $T_T$ has been entered by a user via a temperature input user unit 6. The system comprises a pressure sensor 10, which gathers information on damage to the liquid crystalline networks and on dirt on the liquid crystalline networks and provides the control unit 7 with the information.

**Reference sign list**

1       seat
2       second layer
3       fiber
4       spring mechanism
6       temperature input user unit
7       control unit
8       temperature sensor
11      first layer having perforations
12      mesh

**Claims**

1.  A system, comprising

    - a surface material comprising (i) a first layer having perforations (11) and (ii) a second layer (2) carrying fibers (3),

    wherein the fibers (3) are arranged such that they penetrate the first layer having perforations (11) via the perforations,

    - a mechanism (4) for switching the fibers (3) between an erected position and a relaxed position,
    - a control unit (7) for comparing an actual temperature $T_A$ at at least one position of the surface material with a temperature threshold $T_T$ and for controlling the mechanism (4) for switching the fibers (3) between an erected position and a relaxed position based on the result of the comparison.

2.  A system according to claim 1,
    **characterized in that**
    the mechanism (4) for switching the fibers (3) between an erected position and a relaxed position comprises means for horizontal displacement of the fibers (3) and of the first layer (11) relative to each other.

3.  A system according to one of the preceding claims,
    **characterized in that**
    the surface material is the surface material of a seat (1) or a constituent thereof, more preferably of a car seat (1).

4.  A system according to one of the preceding claims,
    **characterized in that**
    the system comprises a temperature input user unit (6) for providing the control unit (7) with a temperature threshold $T_T$.

5.  A system according to one of the preceding claims,
    **characterized in that**
    the seat (1) comprises a temperature sensor (8) for measuring the actual temperature $T_A$ at at least one position of the surface material or of the seat (1) and for providing the actual temperature $T_A$ to the control unit (7).

**6.** A system according to one of the preceding claims,
**characterized in that**
the at least one position of the surface material or of the seat (1) with the actual temperature $T_A$ is arranged within the perforated first layer (11) or within the second layer (2) carrying fibers.

**7.** A system according to one of the preceding claims,
**characterized in that**
at least a part of the fibers (3) are hollow and/or have capillary function.

**8.** A system according to one of the preceding claims,
**characterized in that**
each fiber (3) has a diameter of 0.01 to 2 mm.

**9.** A method for adjusting the actual temperature $T_A$ or texture at at least one position of a surface material of a system of one of claims 1 to 8, comprising

    a) comparing the actual temperature $T_A$ at at least one position of the surface material with a temperature threshold $T_T$ by means of a control unit (7), and
    b1) if the actual temperature $T_A$ is above / exceeds the temperature threshold $T_T$, the control unit (7) controls the mechanism (4) for switching the fibers (3) between an erected position and a relaxed position to switch the fibers (3) into an erected position, and/or
    b2) if the actual temperature $T_A$ is / falls below the temperature threshold $T_T$, the control unit (7) controls the mechanism (4) for switching the fibers (3) between an erected position and a relaxed position to switch the fibers into a relaxed position.

**10.** A method according to claim 9,
**characterized in that**
the method comprises measuring the actual temperature $T_A$ at at least one position of the surface material or of a seat (1) using a temperature sensor (8) and providing the control unit (7) with the actual temperature $T_A$.

**11.** A method according to claim 9 or claim 10,
**characterized in that**
the method comprises setting the temperature threshold $T_T$ using a temperature input user unit (6) and providing the control unit (7) with the temperature threshold $T_T$.

**12.** A method according to one of the claims 9 to 11,
**characterized in that**
the surface material is the surface material of a car seat (1) or a constituent thereof and preferably the mechanism (4) for switching the fibers (3) between an erected position and a relaxed position switches the fibers (3) into a relaxed position when the car is switched off.

**Patentansprüche**

**1.** System, umfassend

    - ein Oberflächenmaterial, umfassend (i) eine erste Schicht mit Perforationen (11) und (ii) eine zweite Schicht (2), die Fasern (3) trägt,

wobei die Fasern (3) so angeordnet sind, dass sie die erste Schicht mit Perforationen (11) über die Perforationen durchdringen,

    - einen Mechanismus (4) zum Umstellen der Fasern (3) zwischen einer aufgerichteten Stellung und einer entspannten Stellung,
    - eine Steuereinheit (7) zum Vergleichen einer tatsächlichen Temperatur $T_A$ an wenigstens einer Stelle des Oberflächenmaterials mit einem Temperatur-Schwellenwert $T_T$ und zum Steuern des Mechanismus (4) zum Umstellen der Fasern (3) zwischen einer aufgerichteten Stellung und einer entspannten Stellung auf Grundlage des Ergebnisses des Vergleichs.

**2.** System gemäß Anspruch 1,
**dadurch gekennzeichnet, dass**
der Mechanismus (4) zum Umstellen der Fasern (3) zwischen einer aufgerichteten Stellung und einer entspannten Stellung Mittel zum horizontalen Verschieben der Fasern (3) und der ersten Schicht (11) relativ zueinander umfasst.

**3.** System gemäß einem der vorstehenden Ansprüche,
**dadurch gekennzeichnet, dass**
das Oberflächenmaterial das Oberflächenmaterial eines Sitzes (1) oder eines Bestandteils davon, bevorzugter eines Fahrzeugsitzes (1), ist.

**4.** System gemäß einem der vorstehenden Ansprüche,
**dadurch gekennzeichnet, dass**
das System eine Temperatureingabe-Benutzereinheit (6) zum Bereitstellen eines Temperatur-Schwellenwerts $T_T$ an die Steuereinheit (7) umfasst.

**5.** System gemäß einem der vorstehenden Ansprüche,
**dadurch gekennzeichnet, dass**
der Sitz (1) einen Temperatursensor (8) zum Messen der tatsächlichen Temperatur $T_A$ an wenigstens einer Stelle des Oberflächenmaterials oder des Sitzes (1) und zum Bereitstellen der tatsächlichen Temperatur $T_A$ an die Steuereinheit (7) umfasst.

**6.** System gemäß einem der vorstehenden Ansprüche,
**dadurch gekennzeichnet, dass**
die wenigstens eine Stelle des Oberflächenmaterials oder des Sitzes (1) mit der tatsächlichen Temperatur $T_A$ innerhalb der perforierten ersten Schicht (11) oder innerhalb der zweiten Schicht (2), die Fasern trägt, angeordnet ist.

**7.** System gemäß einem der vorstehenden Ansprüche,
**dadurch gekennzeichnet, dass**
wenigstens ein Teil der Fasern (3) hohl sind und/oder Kapillarfunktion aufweisen.

**8.** System gemäß einem der vorstehenden Ansprüche,
**dadurch gekennzeichnet, dass**
jede Faser (3) einen Durchmesser von 0,01 bis 2 mm aufweist.

**9.** Verfahren zum Einstellen der tatsächlichen Temperatur $T_A$ oder der Textur an wenigstens einer Stelle eines Oberflächenmaterials oder Systems gemäß einem der Ansprüche 1 bis 8, umfassend

a) Vergleichen der tatsächlichen Temperatur $T_A$ an wenigstens einer Stelle des Oberflächenmaterials mit einem Temperatur-Schwellenwert $T_T$ mithilfe einer Steuereinheit (7) und
b1) wenn die tatsächliche Temperatur $T_A$ über dem Temperatur-Schwellenwert $T_T$ liegt/ihn übersteigt, steuert die Steuereinheit (7) den Mechanismus (4) zum Umstellen der Fasern (3) zwischen einer aufgerichteten Stellung und einer entspannten Stellung, um die Fasern (3) in eine aufgerichtete Stellung zu stellen, und/oder
b2) wenn die tatsächliche Temperatur $T_A$ unter dem Temperatur-Schwellenwert $T_T$ liegt/unter ihn fällt, steuert die Steuereinheit (7) den Mechanismus (4) zum Umstellen der Fasern (3) zwischen einer aufgerichteten Stellung und einer entspannten Stellung, um die Fasern in eine entspannte Stellung zu stellen.

**10.** Verfahren gemäß Anspruch 9,
**dadurch gekennzeichnet, dass**
das Verfahren Messen der tatsächlichen Temperatur $T_A$ an wenigstens einer Stelle des Oberflächenmaterials oder eines Sitzes (1) unter Verwendung eines Temperatursensors (8) und Bereitstellen der tatsächlichen Temperatur $T_A$ an die Steuereinheit (7) umfasst.

**11.** Verfahren gemäß Anspruch 9 oder Anspruch 10,
**dadurch gekennzeichnet, dass**
das Verfahren Einstellen des Temperatur-Schwellenwerts $T_T$ unter Verwendung einer Temperatureingabe-Benutzereinheit (6) und Bereitstellen des Temperatur-Schwellenwerts $T_T$ an die Steuereinheit (7) umfasst.

**12.** System gemäß einem der Ansprüche 9 bis 11,

**dadurch gekennzeichnet, dass**
das Oberflächenmaterial das Oberflächenmaterial eines Fahrzeugsitzes (1) oder ein Bestandteil davon ist und vorzugsweise der Mechanismus (4) zum Umstellen der Fasern (3) zwischen einer aufgerichteten Stellung und einer entspannten Stellung die Fasern (3) in eine entspannte Stellung stellt, wenn das Fahrzeug abgeschaltet ist.

## Revendications

1. Système, comprenant

   - un matériau de surface comprenant (i) une première couche ayant des perforations (11) et (ii) une deuxième couche (2) portant des fibres (3),

   les fibres (3) étant disposées de telle sorte qu'elles pénètrent dans la première couche ayant des perforations (11) par les perforations,

   - un mécanisme (4) servant à basculer les fibres (3) entre une position dressée et une position relâchée,
   - une unité de commande (7) servant à comparer une température réelle $T_A$ à au moins une position du matériau de surface avec un seuil de température $T_T$ et à commander le mécanisme (4) servant à basculer les fibres (3) entre une position dressée et une position relâchée sur la base du résultat de la comparaison.

2. Système selon la revendication 1,
   **caractérisé en ce que**
   le mécanisme (4) servant à basculer les fibres (3) entre une position dressée et une position relâchée comprend des moyens pour un déplacement horizontal des fibres (3) et de la première couche (11) les unes par rapport à l'autre.

3. Système selon une des revendications précédentes,
   **caractérisé en ce que**
   le matériau de surface est le matériau de surface d'un siège (1) ou d'un constituant de celui-ci, mieux encore d'un siège de voiture (1).

4. Système selon une des revendications précédentes,
   **caractérisé en ce que**
   le système comprend une unité utilisateur d'entrée de température (6) pour fournir à l'unité de commande (7) un seuil de température $T_T$.

5. Système selon une des revendications précédentes,
   **caractérisé en ce que**
   le siège (1) comprend un capteur de température (8) servant à mesurer la température réelle $T_A$ à au moins une position du matériau de surface ou du siège (1) et à fournir la température réelle $T_A$ à l'unité de commande (7).

6. Système selon une des revendications précédentes,
   **caractérisé en ce que**
   l'au moins une position du matériau de surface ou du siège (1) avec la température réelle $T_A$ est disposée à l'intérieur de la première couche perforée (11) ou à l'intérieur de la deuxième couche (2) portant des fibres.

7. Système selon une des revendications précédentes,
   **caractérisé en ce que**
   au moins une partie des fibres (3) sont creuses et/ou ont une fonction capillaire.

8. Système selon une des revendications précédentes,
   **caractérisé en ce que**
   chaque fibre (3) a un diamètre de 0,01 à 2 mm.

9. Procédé d'ajustement de la température réelle $T_A$ ou de la texture à au moins une position d'un matériau de surface d'un système d'une des revendications 1 à 8, comprenant

   a) la comparaison de la température réelle $T_A$ à au moins une position du matériau de surface avec un seuil de température $T_T$ au moyen d'une unité de commande (7), et

b1) si la température réelle $T_A$ est au-dessus de/dépasse le seuil de température $T_T$, l'unité de commande (7) commande le mécanisme (4) servant à basculer les fibres (3) entre une position dressée et une position relâchée pour basculer les fibres (3) dans une position dressée, et/ou

b2) si la température réelle $T_A$ est/chute au-dessous du seuil de température $T_T$, l'unité de commande (7) commande le mécanisme (4) servant à basculer les fibres (3) entre une position dressée et une position relâchée pour basculer les fibres dans une position relâchée.

10. Procédé selon la revendication 9,
**caractérisé en ce que**
le procédé comprend la mesure de la température réelle $T_A$ à au moins une position du matériau de surface ou d'un siège (1) au moyen d'un capteur de température (8) et la fourniture à l'unité de commande (7) de la température réelle $T_A$.

11. Procédé selon la revendication 9 ou la revendication 10,
**caractérisé en ce que**
le procédé comprend le réglage du seuil de température $T_T$ au moyen d'une unité utilisateur d'entrée de température (6) et la fourniture à l'unité de commande (7) du seuil de température $T_T$.

12. Procédé selon une des revendications 9 à 11,
**caractérisé en ce que**
le matériau de surface est le matériau de surface d'un siège de voiture (1) ou d'un constituant de celui-ci et de préférence le mécanisme (4) servant à basculer les fibres (3) entre une position dressée et une position relâchée bascule les fibres (3) dans une position relâchée quand la voiture est arrêtée.

Fig. 1

Fig. 2

Fig. 3

Fig. 4

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130005848 A1
- RU 2293815 C2
- DE 102009033254 A1
- US 20170240811 A1
- US 9598313 B2
- US 20100291350 A1